# FASCICULE DE BREVET EUROPEEN

(11) **EP 4 674 760 B1**
(45) Date de publication et mention de la délivrance du brevet: **12.08.2026**
(21) Numéro de dépôt: 25177689.4
(22) Date de dépôt: 20.05.2025
(51) Int. Cl.: B64D 27/34, B64D 27/355, B64D 37/30

(54) **DISPOSITIF D' ALIMENTATION EN CARBURANT COMPRENANT AU MOINS DEUX RÉSERVOIRS D' HYDROGÈNE À L' ÉTAT LIQUIDE ET À DES PRESSIONS DIFFÉRENTES**
KRAFTSTOFFVERSORGUNGSEINRICHTUNG MIT MINDESTENS ZWEI WASSERSTOFFTANKS IM FLÜSSIGEN ZUSTAND UND UNTERSCHIEDLICHEN DRÜCKEN
FUEL SUPPLY DEVICE WITH AT LEAST TWO HYDROGEN TANKS IN THE LIQUID STATE AND AT DIFFERENT PRESSURES

(30) Priorité: 03.07.2024 FR 2407240
(43) Date de publication de la demande: 07.01.2026
(73) Titulaire: AIRBUS OPERATIONS (S.A.S.), 31060 Toulouse (FR)
(72) Inventeur: RAVENEAU, Guillaume, 31060 TOUOUSE Cedex 9 (FR)
(74) Mandataire: Airbus-OPS SAS

(56) Documents cités:
- EP-B1- 2 466 188
- WO-A1-2022/263307
- US-A1- 2023 340 913

## Description

La présente demande se rapporte à un dispositif d'alimentation en carburant comprenant au moins deux réservoirs d'hydrogène à l'état liquide et à des pressions différentes ainsi qu'à un aéronef comprenant au moins un tel dispositif d'alimentation.

Selon un mode de réalisation, un dispositif d'alimentation d'un aéronef comprend au moins un réservoir d'hydrogène ainsi qu'au moins un circuit de distribution reliant le réservoir d'hydrogène et au moins un système à hydrogène fonctionnant à l'hydrogène, comme un moteur à hydrogène ou une pile à combustible.

Chaque circuit de distribution comprend des conduits ainsi que différents équipements, comme des pompes, des capteurs, des vannes ou des échangeurs par exemple, reliés entre eux par les conduits.

Selon un premier mode de réalisation, l'hydrogène est stocké dans le réservoir d'hydrogène à l'état liquide, à une température cryogénique, et le circuit de distribution comprend une pompe haute pression pour mettre en pression l'hydrogène ainsi qu'un échangeur thermique configuré pour réchauffer l'hydrogène, l'hydrogène passant de l'état liquide à l'état gazeux.

Même si ce premier mode de réalisation permet de fortement réduire le volume du réservoir par rapport à un réservoir stockant de l'hydrogène à l'état gazeux, il n'est pas pleinement satisfaisant car le circuit de distribution est beaucoup plus complexe et comprend un plus grand nombre d'équipements. Ainsi certains équipements sont prévus pour adapter la quantité d'hydrogène fournie au(x) moteur(s) en fonction du régime moteur souhaité alors que d'autres sont prévus pour doubler certains équipements en cas de défaillance pour obtenir un haut niveau de sécurité.

Selon un deuxième mode de réalisation, l'hydrogène est stocké dans un réservoir d'hydrogène à l'état liquide, à une température cryogénique et à une pression supérieure à la pression de fonctionnement du système à hydrogène.

Même si ce deuxième mode de réalisation permet de réduire la masse du réservoir par rapport à un réservoir stockant de l'hydrogène à l'état gazeux (le réservoir doit résister à une pression plus faible), le réservoir reste volumineux (la densité de l'hydrogène est plus faible par rapport au premier mode de réalisation) et sa masse est supérieure à celle du réservoir du premier mode de réalisation (le réservoir doit résister à une pression plus forte). EP2466188B1 décrit un système comprenant plusieurs chambres de pompage thermodynamiques qui reçoivent successivement du liquide cryogénique provenant d'un réservoir et qui sont reliées entre elles, par l'intermédiaire d'un échangeur de chaleur, à un réservoir d'alimentation en gaz afin d'assurer une alimentation continue en gaz. US2023/340913A1 décrit un système de distribution de carburant à base d'hydrogène utilisant une pompe immergée et du gaz naturel comprimé.

La présente invention vise à remédier à tout ou partie des inconvénients de l'art antérieur.

A cet effet, l'invention a pour objet un dispositif d'alimentation configuré pour alimenter en hydrogène au moins un système à hydrogène fonctionnant à une pression de fonctionnement, ledit dispositif d'alimentation comprenant :
a. au moins un premier réservoir configuré pour stocker de l'hydrogène à un état liquide et à une pression inférieure à la pression de fonctionnement, ledit premier réservoir comportant au moins un orifice de sortie,
b. au moins une ligne principale qui s'étend d'une extrémité amont reliée à l'orifice de sortie du premier réservoir jusqu'à au moins une extrémité aval configurée pour être reliée à un système à hydrogène,
c. au moins une pompe située sur la ligne principale et configurée pour comprimer l'hydrogène sortant du premier réservoir à une pression supérieure ou égale à la pression de fonctionnement,
d. au moins un système de régulation thermique principal situé en amont de l'extrémité aval de la ligne principale.

Selon l'invention, le dispositif d'alimentation comprend au moins un deuxième réservoir configuré pour stocker de l'hydrogène à un état liquide et à une pression supérieure à la pression de fonctionnement, ce deuxième réservoir alimentant en hydrogène la ligne principale entre la pompe et le système de régulation thermique principal.

Selon l'invention, le dispositif d'alimentation comprend au moins un système de régulation de pression situé dans le deuxième réservoir.

Cette solution combine les avantages des premier et deuxième modes de réalisation de l'art antérieur. Le premier réservoir permet d'obtenir une alimentation comme les dispositifs de l'art antérieur stockant l'hydrogène à l'état liquide, ce qui contribue à limiter le volume et la masse du réservoir à quantité d'énergie équivalente. Le deuxième réservoir contribue à simplifier le dispositif d'alimentation. L'invention permet également de réduire le nombre d'éléments composant le dispositif d'alimentation.

Selon une autre caractéristique, la ligne principale comprend un point de bifurcation distant des extrémités amont et aval, un tronçon amont qui s'étend entre l'extrémité amont de la ligne principale et le point de bifurcation ainsi qu'au moins un tronçon aval qui s'étend entre le point de bifurcation et l'extrémité aval de la ligne principale, le premier réservoir comprenant au moins un orifice d'entrée via lequel est introduit de l'hydrogène dans le premier réservoir. En complément, le dispositif d'alimentation comprend au moins une ligne retour reliant le point de bifurcation et l'orifice d'entrée du premier réservoir ainsi qu'un système de contrôle des flux d'hydrogène dans les tronçons amont et aval ainsi que dans la ligne retour.

Selon une autre caractéristique, le système de contrôle des flux d'hydrogène comprend au moins une première vanne au niveau du tronçon amont, au moins une deuxième vanne au niveau de la ligne retour ainsi qu'au moins une troisième vanne au niveau du tronçon aval, chacune des première, deuxième et troisième vannes étant configurée pour ajuster le débit de l'hydrogène qui la traverse.

Selon une autre caractéristique, le dispositif d'alimentation comprend au moins un système de régulation thermique situé au niveau de la ligne retour. Avantageusement, ce premier système de régulation est un système de régulation thermique, c'est-à-dire configuré pour réguler une température.

Selon une autre caractéristique, le deuxième réservoir est situé au niveau de la ligne retour et comprend au moins un orifice de sortie relié à l'orifice d'entrée du premier réservoir ainsi qu'au moins un orifice combiné relié au point de bifurcation.

Selon une autre caractéristique, le deuxième réservoir est situé entre le point de bifurcation et le système de régulation thermique.

Selon une autre caractéristique, le deuxième réservoir est situé au niveau du tronçon aval et comprend au moins un orifice de sortie relié à l'extrémité aval de la ligne principale ainsi qu'au moins un orifice d'entrée relié au point de bifurcation.

Selon une autre caractéristique, la troisième vanne est intercalée entre le deuxième réservoir et le point de bifurcation, le dispositif d'alimentation comprenant une quatrième vanne située entre le deuxième réservoir et le système de régulation thermique principal.

Selon une autre caractéristique, la ligne principale comprend plusieurs extrémités aval ainsi que plusieurs branches distinctes, une pour chaque extrémité aval, chaque branche comportant un système de régulation thermique principal.

L'invention a également pour objet un aéronef comprenant au moins un dispositif d'alimentation selon l'une des caractéristiques précédentes ainsi qu'au moins un système à hydrogène alimenté en hydrogène par le dispositif d'alimentation.

D'autres caractéristiques et avantages ressortiront de la description de l'invention qui va suivre, description donnée à titre d'exemple uniquement, en regard des dessins annexés parmi lesquels :
Fig. 1 est une vue latérale d'un aéronef,
Fig. 2 est une représentation schématique d'un dispositif d'alimentation en hydrogène d'un aéronef illustrant un premier mode de réalisation de l'invention selon un mode de fonctionnement normal,
Fig. 3 est une représentation schématique du dispositif d'alimentation visible sur la figure 2 selon un mode de fonctionnement en présence d'une défaillance,
Fig. 4 est une représentation schématique du dispositif d'alimentation visible sur la figure 2 selon un mode de fonctionnement adapté à une phase de roulage au sol,
Fig. 5 est une représentation schématique du dispositif d'alimentation visible sur la figure 2 selon un premier mode de fonctionnement adapté à une phase de décollage,
Fig. 6 est une représentation schématique du dispositif d'alimentation visible sur la figure 2 selon un deuxième mode de fonctionnement adapté à une phase décollage,
Fig. 7 est une représentation schématique d'un dispositif d'alimentation en hydrogène d'un aéronef illustrant un deuxième mode de réalisation de l'invention selon un mode de fonctionnement normal,
Fig. 8 est une représentation schématique du dispositif d'alimentation visible sur la figure 7 selon un mode de fonctionnement en présence d'une défaillance,
Fig. 9 est une représentation schématique du dispositif d'alimentation visible sur la figure 7 selon un mode de fonctionnement adapté à une phase de roulage au sol,
Fig. 10 est une représentation schématique du dispositif d'alimentation visible sur la figure 7 selon un premier mode de fonctionnement adapté à une phase de décollage,
Fig. 11 est une représentation schématique du dispositif d'alimentation visible sur la figure 7 selon un deuxième mode de fonctionnement adapté à une phase décollage,
Fig. 12 est une représentation schématique de deux dispositifs d'alimentation en hydrogène d'un aéronef prévu pour alimenter quatre systèmes à hydrogène.

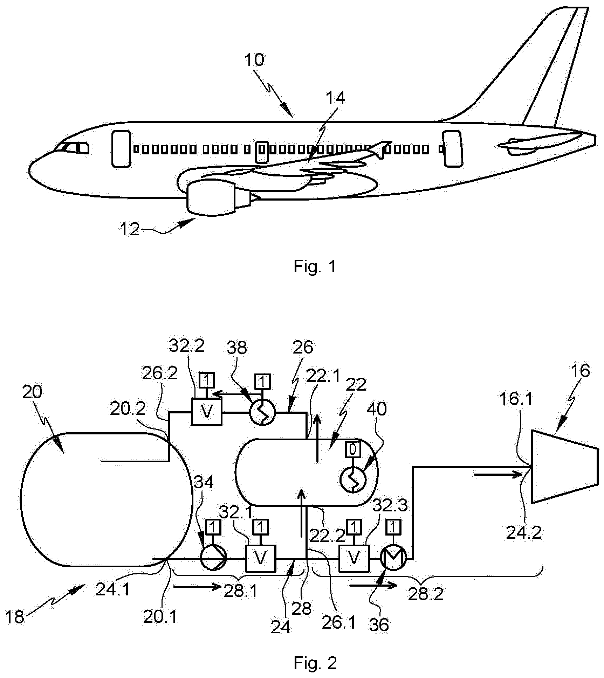

Comme illustré sur la figure 1, un aéronef 10 comprend plusieurs ensembles de propulsion 12 situés sous les ailes 14 et reliés à ces dernières.

Selon une configuration, au moins un des ensembles de propulsion 12 comprend un moteur électrique alimenté en énergie électrique par au moins une pile à combustible.

Selon une autre configuration, au moins un des ensembles de propulsion 12 comprend un turboréacteur ou un turbopropulseur fonctionnant à l'hydrogène.

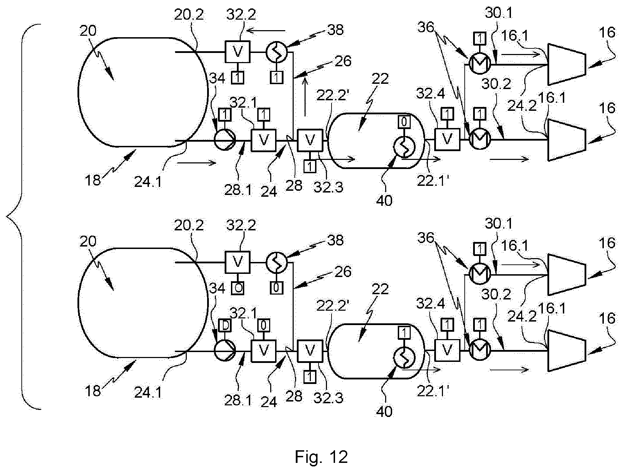

Quel que soit le mode de réalisation, l'aéronef 10 comprend au moins un système à hydrogène 16 (visible sur les figures 2 à 12) consommant de l'hydrogène ainsi qu'au moins un dispositif d'alimentation 18 en hydrogène configuré pour alimenter le (ou les) système(s) à hydrogène 16. Selon un mode de réalisation visible sur la figure 12, l'aéronef comprend deux dispositifs d'alimentation 18 reliés chacun à deux systèmes à hydrogène 16.

Chaque système à hydrogène 16 comprend au moins une admission 16.1 et fonctionne à une pression de fonctionnement donnée.

Le dispositif d'alimentation 18 comprend au moins un premier réservoir 20 configuré pour stocker de l'hydrogène à l'état liquide et à basse pression ainsi qu'au moins un deuxième réservoir 22 configuré pour stocker de l'hydrogène à l'état liquide et à une pression moyenne.

Par basse pression, on entend une pression comprise entre 1 et 6 bars, de préférence de l'ordre de 4 bars.

Par pression moyenne, on entend une pression supérieure à la basse pression et supérieure ou égale à la pression de fonctionnement du (ou des) système(s) à hydrogène. La pression moyenne est comprise entre 6 et 10 bars, de préférence égale à environ 8 bars.

Dans les premier et deuxième réservoirs 20, 22, l'hydrogène est stocké à une température cryogénique de l'ordre de -253°C. Le fait de stocker l'hydrogène à l'état liquide permet de réduire les dimensions de chacun des premier et deuxième réservoirs 20, 22, ce qui contribue à réduire la masse embarquée.

Les premier et deuxième réservoirs 20, 22 sont thermiquement isolés pour réduire les déperditions. Ces premier et deuxième réservoirs 20, 22 ne sont pas plus décrits car ils peuvent être identiques aux réservoirs de l'art antérieur configurés pour stocker de l'hydrogène liquéfié.

Selon un mode de réalisation, le premier réservoir 20 comprend au moins un orifice de sortie 20.1 via lequel sort l'hydrogène à l'état liquide. Selon une configuration, le premier réservoir 20 comprend au moins un orifice d'entrée 20.2 via lequel est introduit de l'hydrogène dans le premier réservoir 20.

Le dispositif d'alimentation 18 comprend une ligne principale 24 reliant le premier réservoir 20 et au moins un système à hydrogène 16. Selon un mode de réalisation, la ligne principale 24 comprend une extrémité amont 24.1 reliée à l'orifice de sortie 20.1 du premier réservoir 20 ainsi qu'une extrémité aval 24.2 reliée à l'admission 16.1 du système à hydrogène 16.

Le dispositif d'alimentation 18 comprend au moins une ligne retour 26 reliant le premier réservoir 20 et la ligne principale 24 en un point de bifurcation 28 distant du premier réservoir 20 et du système à hydrogène 16. Selon un mode de réalisation, la ligne retour 26 comprend une première extrémité 26.1 reliée au point de bifurcation 28 ainsi qu'une deuxième extrémité 26.2 reliée à l'orifice d'entrée 20.2 du premier réservoir 20. La ligne principale 24 comprend un tronçon amont 28.1 qui s'étend entre le premier réservoir 20 (ou l'extrémité amont 24.1 de la ligne principale 24) et le point de bifurcation 28 ainsi qu'au moins un tronçon aval 28.2 qui s'étend entre le point de bifurcation 28 et le (ou les) système(s) à hydrogène 16 (ou l'extrémité aval 24.2 de la ligne principale 24).

Selon une configuration visible sur la figure 12, lorsqu'elle alimente plusieurs systèmes à hydrogène 16, la ligne principale 24 comprend plusieurs extrémités aval 24.2 ainsi que plusieurs branches distinctes 30.1, 30.2, une pour chaque extrémité aval 24.2. Ainsi, la ligne principale 24 comprend, de l'amont vers l'aval, un tronçon amont 28.1, un tronçon aval 28.2 commun qui s'étend à partir du point de bifurcation 28 puis une branche 30.1, 30.2 pour chaque système à hydrogène 16 reliant le tronçon aval 28.2 commun et le système à hydrogène 16 correspondant (ou l'extrémité aval 24.2 de la ligne principale 24.

Le dispositif d'alimentation 18 comprend un système de contrôle des flux d'hydrogène dans les tronçons amont et aval 28.1, 28.2 et la ligne retour 26. Selon une configuration, le dispositif d'alimentation 18 comprend au moins une première vanne 32.1 au niveau du tronçon amont 28.1, au moins une deuxième vanne 32.2 au niveau de la ligne retour 26 ainsi qu'au moins une troisième vanne 32.3 au niveau du tronçon aval 28.2. Chacune des première, deuxième et troisième vannes 32.1, 32.2, 32.3 est configurée pour ajuster le débit de l'hydrogène qui la traverse.

Selon un agencement, la troisième vanne 32.3 est positionnée juste en aval du point de bifurcation 28. Ainsi, aucun élément n'est intercalé entre le point de bifurcation 28 et la troisième vanne 32.3. Selon un agencement, en présence de plusieurs systèmes à hydrogène 16, la troisième vanne 32.3 est située au niveau du tronçon aval 28.2 commun et non au niveau des branches 30.1, 30.2.

Selon un mode de réalisation, le dispositif d'alimentation 18 comprend au moins une pompe 34 située au niveau du tronçon amont 28.1, juste en aval de l'orifice de sortie 20.1 du premier réservoir 20. Le dispositif d'alimentation 18 comprend au moins un système de régulation thermique principal 36, comme un échangeur thermique par exemple, situé au niveau du tronçon aval 28.2, juste en amont de l'extrémité aval 24.2 de la ligne principale 24 ou de l'admission 16.1 du système à hydrogène 16. Selon un agencement, en présence de plusieurs systèmes à hydrogène 16, le dispositif d'alimentation 18 comprend un système de régulation thermique principal 36 pour chaque système à hydrogène 16, situé au niveau de chaque branche 30.1, 30.2.

Selon une configuration, le dispositif d'alimentation 18 comprend au moins un premier système de régulation 38 thermique, dit premier système de régulation, situé au niveau de la ligne retour 26, configuré pour réguler la température de l'hydrogène circulant dans la ligne retour 26 et réintroduit dans le premier réservoir 20. Selon un mode de fonctionnement, le premier système de régulation 38 thermique est configuré pour réguler la température de l'hydrogène circulant dans la ligne retour 26 de manière à faire évaporer l'hydrogène liquide en hydrogène gazeux à une température supérieure ou égale à la température de l'hydrogène du premier réservoir 20 afin d'augmenter la pression de l'hydrogène et que le premier réservoir 20 soit en sous-refroidissement (ce qui permet un fonctionnement correct des pompes). Selon un agencement, le premier système de régulation 38 thermique est situé entre le point de bifurcation 28 et la deuxième vanne 32.2.

Selon un mode de réalisation, le dispositif d'alimentation 18 comprend au moins un deuxième système de régulation 40, dit système de régulation de pression, situé dans le deuxième réservoir 22 et configuré pour réguler la pression de l'hydrogène dans le deuxième réservoir 22, dans certains modes opératoires, afin de déclencher, par une augmentation de la température de l'hydrogène (par un ajout de chaleur), une évaporation d'au moins une partie de l'hydrogène liquide en hydrogène gazeux dans ledit deuxième réservoir 22.

Les premier et deuxième systèmes de régulation 38, 40 peuvent être de type électrique ou autres.

Selon un premier mode de réalisation visible sur les figures 2 à 6, les premier et deuxième réservoirs 20, 22 sont positionnés en parallèle, le deuxième réservoir 22 étant situé au niveau de la ligne retour 26. Dans ce cas, le deuxième réservoir 22 comprend au moins un orifice de sortie 22.1 relié à l'orifice d'entrée 20.2 du premier réservoir 20 ainsi qu'au moins un orifice combiné 22.2, assurant la sortie ou l'entrée de l'hydrogène dans le deuxième réservoir 22, relié au point de bifurcation 28. Selon un agencement, le deuxième réservoir 22 est situé entre le point de bifurcation 28 et le premier système de régulation 38 thermique.

Selon un mode de fonctionnement dit normal illustré sur la figure 2, en phase de vol et en l'absence de défaillance(s), l'hydrogène sort du premier réservoir 20 à basse pression. Dès sa sortie, l'hydrogène traverse la pompe 34 pour être comprimé et atteindre une pression supérieure adaptée au(x) système(s) à hydrogène 16 et au deuxième réservoir 22. Au point de bifurcation 28, une première partie de l'hydrogène sortant de la pompe 34 est introduite dans le deuxième réservoir 22 et une deuxième partie de l'hydrogène est transmis au(x) système(s) à hydrogène 16.

Le deuxième système de régulation 40 n'est pas nécessairement activé. Il permet, si nécessaire, de chauffer l'hydrogène présent dans le deuxième réservoir 22 et de réguler sa pression à l'intérieur de ce deuxième réservoir 22. La pression de l'hydrogène présent dans le deuxième réservoir 22 peut également être régulée en ajustant la quantité d'hydrogène entrant dans le deuxième réservoir 22 grâce aux première et troisième vannes 32.1, 32.3 ainsi que la quantité d'hydrogène sortant du deuxième réservoir 22 grâce à la deuxième vanne 32.2. Selon ce mode de fonctionnement normal, chaque système à hydrogène 16 est uniquement alimenté en hydrogène par le premier réservoir 20, l'hydrogène sortant du premier réservoir 20 étant comprimé par la pompe 34 pour augmenter sa pression à une pression supérieure ou égale à la pression de fonctionnement du (ou des) système(s) à hydrogène 16.

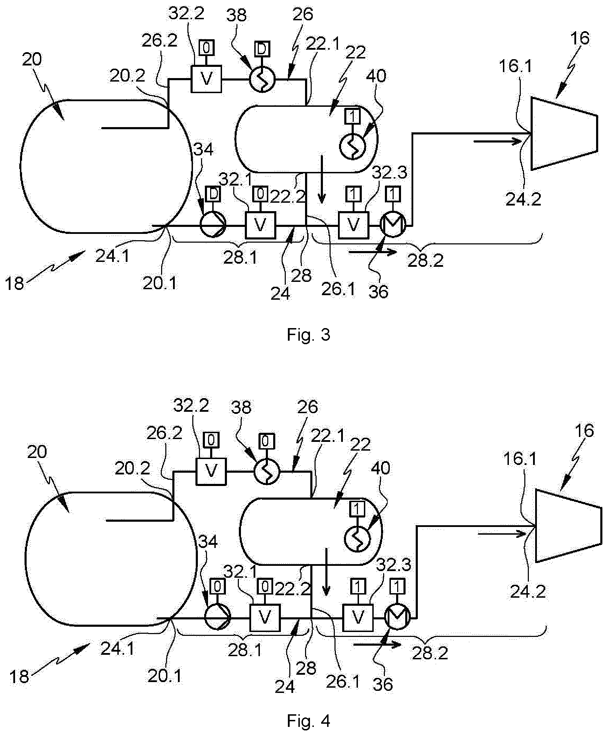

Selon un mode de fonctionnement dégradé illustré sur la figure 3, en présence d'une défaillance, lorsqu'au moins un élément parmi la pompe 34 et le premier système de régulation 38 thermique est défaillant, le premier réservoir 22 est isolé en fermant les première et deuxième vannes 32.1, 32.2. Dans ce cas, le deuxième système de régulation 40 peut être activé. La pression d'hydrogène dans le deuxième réservoir 22 étant supérieure ou égale à la pression de fonctionnement du (ou des) système(s) à hydrogène 16, le deuxième réservoir 22 alimente, sans pompe, le (ou les) système(s) à hydrogène 16.

Selon un mode de fonctionnement adapté à une phase de roulage au sol et illustré sur la figure 4, le premier réservoir 22 est isolé en fermant les première et deuxième vannes 32.1, 32.2 après l'atterrissage. En complément, la pompe 38 et le premier système de régulation 38 thermique sont à l'arrêt. La pression d'hydrogène dans le deuxième réservoir 22 étant supérieure ou égale à la pression de fonctionnement du (ou des) système(s) à hydrogène 16, le deuxième réservoir 22 alimente, sans pompe, le (ou les) système(s) à hydrogène 16. Ainsi, la majorité de l'hydrogène présent dans le deuxième réservoir 22 est consommée préalablement à une phase de ravitaillement au sol avant le prochain vol. Cette solution permet d'optimiser la quantité d'hydrogène stockée dans les premier et deuxième réservoirs 20, 22 pour un vol.

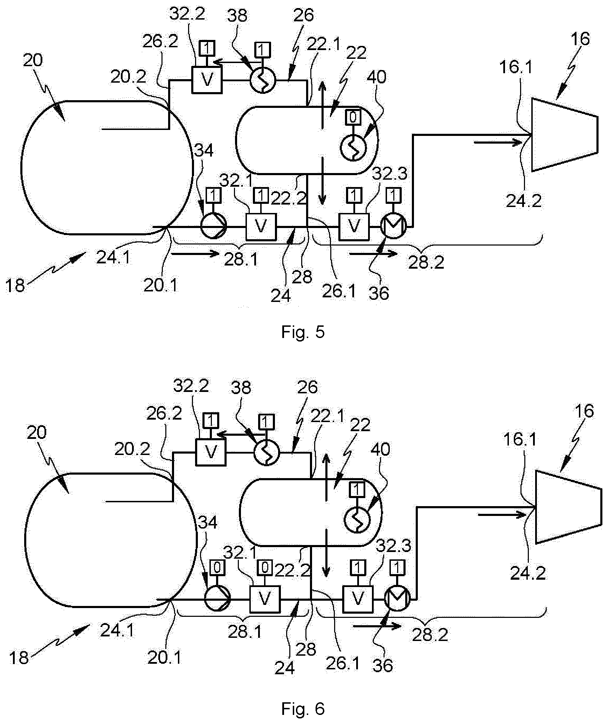

Selon un premier mode de fonctionnement adapté à une phase de décollage illustré sur la figure 5, l'hydrogène sortant du premier réservoir 20 est comprimé par la pompe 34 pour être à une pression adaptée au(x) système(s) à hydrogène 16 et au deuxième réservoir 22, comme pour le mode de fonctionnement normal. L'hydrogène présent dans le deuxième réservoir 22 s'écoule en direction du premier réservoir 20 et/ou du (ou des) système(s) à hydrogène 16. Le deuxième système de régulation 40 peut ne pas être activé. Selon ce premier mode de fonctionnement adapté à une phase de décollage, chaque système à hydrogène 16 peut être simultanément alimenté en hydrogène par les premier et deuxième réservoirs 20, 22.

Selon un deuxième mode de fonctionnement adapté à une phase de décollage illustré sur la figure 6, chaque système à hydrogène 16 est alimenté en hydrogène uniquement par le deuxième réservoir 22 et non par le premier réservoir 20. La pompe 34 est donc à l'arrêt et la première vanne 32.1 est à l'état fermé. Dans ce cas, le deuxième système de régulation 40 est activé pour chauffer l'hydrogène présent dans le deuxième réservoir 22.

Comme illustré sur la figure 6, le deuxième réservoir 22 peut également être utilisé pour alimenter le premier réservoir 20 en ouvrant la deuxième vanne 32.2. Ce mode de fonctionnement peut être prolongé jusqu'à ce que la pression dans le deuxième réservoir 22 ne soit plus suffisante pour alimenter le (ou les) système(s) à hydrogène 16.

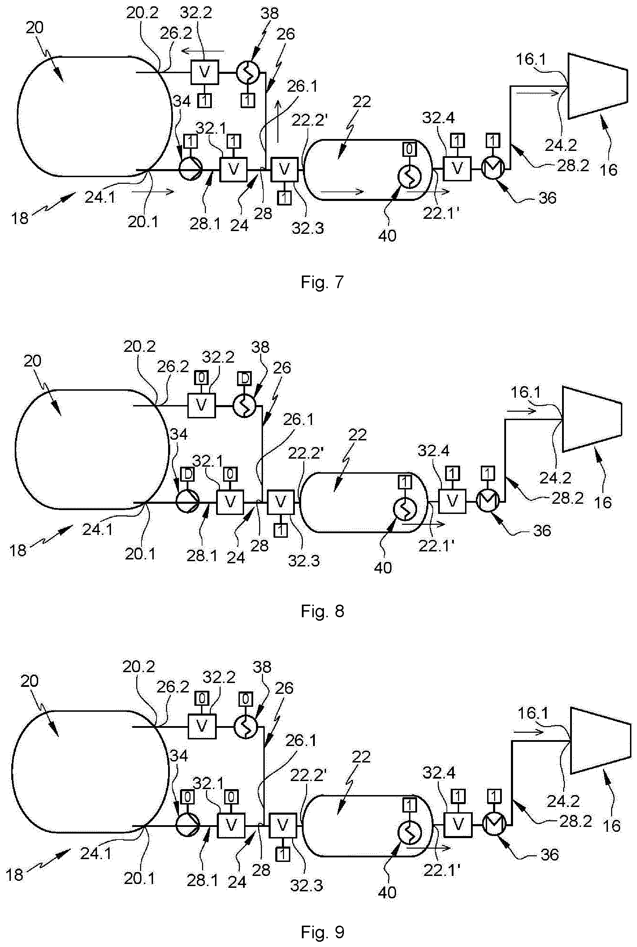

Selon un deuxième mode de réalisation visible sur les figures 7 à 12, les premier et deuxième réservoirs 20, 22 sont positionnés en série, le deuxième réservoir 22 étant situé au niveau du tronçon aval 28.2, plus particulièrement au niveau du tronc commun du tronçon aval 28.2 situé en amont des branches 30.1, 30.2. Dans ce cas, le deuxième réservoir 22 comprend au moins un orifice de sortie 22.1' relié à l'extrémité aval 24.2 de la ligne principale 24 ainsi qu'au moins un orifice d'entrée 22.2' relié au point de bifurcation 28.

Selon ce deuxième mode de réalisation, la troisième vanne 32.3 est intercalée entre le deuxième réservoir 22 et le point de bifurcation 28. En complément, le dispositif d'alimentation 18 comprend une quatrième vanne 32.4 située en sortie du deuxième réservoir 22, plus particulièrement entre le deuxième réservoir 22 et le (ou les) système(s) de régulation thermique principal(aux).

Selon un mode de fonctionnement dit normal illustré sur la figure 7, en phase de vol et en l'absence de défaillance(s), l'hydrogène sort du premier réservoir 20 à basse pression. Dès sa sortie, l'hydrogène traverse la pompe 34 pour être à une pression supérieure adaptée au(x) système(s) à hydrogène 16 et au deuxième réservoir 22.

L'hydrogène sortant de la pompe 34 alimente en cascade le deuxième réservoir 22 qui lui-même alimente le (ou les) système(s) à hydrogène 16. Le deuxième système de régulation 40 n'est pas nécessairement activé.

En fonction des circonstances, une partie de l'hydrogène sortant de la pompe 34 est réintroduit dans le premier réservoir 20 via la ligne retour 26 en ajustant le débit des deuxième et troisième vannes 32.2, 32.3.

Selon un mode de fonctionnement dégradé illustré sur la figure 8, en présence d'une défaillance, lorsqu'au moins un élément parmi la pompe 34 et le premier système de régulation 38 thermique est défaillant, le premier réservoir 22 est isolé en fermant les première et deuxième vannes 32.1, 32.2. Dans ce cas, le deuxième système de régulation 40 est généralement activé. La pression d'hydrogène dans le deuxième réservoir 22 étant supérieure ou égale à la pression de fonctionnement du (ou des) système(s) à hydrogène 16, le deuxième réservoir 22 alimente, sans pompe, le (ou les) système(s) à hydrogène 16.

Selon un mode de fonctionnement adapté à une phase de roulage au sol illustré sur la figure 9, le premier réservoir 22 est isolé en fermant les première et deuxième vannes 32.1, 32.2 après l'atterrissage. En complément, la pompe 38 et le premier système de régulation 38 thermique sont à l'arrêt. La pression d'hydrogène dans le deuxième réservoir 22 étant supérieure ou égale à la pression de fonctionnement du (ou des) système(s) à hydrogène 16, le deuxième réservoir 22 alimente, sans pompe, le (ou les) système(s) à hydrogène 16. Ainsi, la majorité de l'hydrogène présent dans le deuxième réservoir 22 est consommée préalablement à une phase de ravitaillement au sol avant le prochain vol. Cette solution permet d'optimiser la quantité d'hydrogène stockée dans les premier et deuxième réservoirs 20, 22 pour un vol.

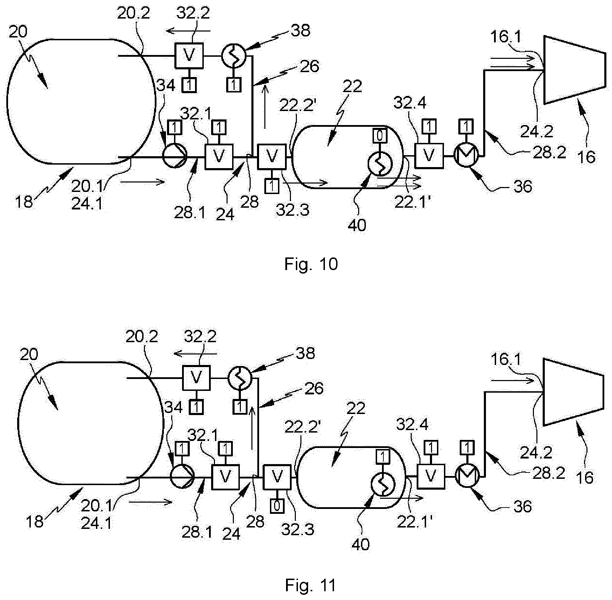

Selon un premier mode de fonctionnement adapté à une phase de décollage et illustré sur la figure 10, l'hydrogène sortant du premier réservoir 20 est comprimé par la pompe 34 pour être à une pression adaptée au(x) système(s) à hydrogène 16 et au deuxième réservoir 22, comme pour le mode de fonctionnement normal. L'hydrogène sortant de la pompe 34 alimente en cascade le deuxième réservoir 22 qui lui-même alimente le (ou les) système(s) à hydrogène 16. Le deuxième système de régulation 40 n'est pas nécessairement activé.

En fonction des circonstances, une partie de l'hydrogène sortant de la pompe 34 est réintroduit dans le premier réservoir 20 via la ligne retour 26 en ajustant le débit des deuxième et troisième vannes 32.2, 32.3.

Selon un deuxième mode de fonctionnement adapté à une phase de décollage et illustré sur la figure 11, chaque système à hydrogène 16 est alimenté en hydrogène uniquement par le deuxième réservoir 22 et non par le premier réservoir 20. Ce dernier est isolé du tronçon aval 28.1 en fermant la troisième vanne 32.3. Le premier réservoir 20 peut être en sous-refroidissement par injection d'hydrogène gazeux via la pompe 34 et le système de régulation 38 thermique (indépendant du deuxième réservoir 22 et du système à hydrogène 16).

L'hydrogène sortant du premier réservoir 20 est comprimé par la pompe 34 puis réintroduit dans le premier réservoir 20 via la ligne retour 26. Le premier système de régulation 38 thermique peut être activé et les première et deuxième vannes 32.2 sont à l'état ouvert.

Dans ce cas, le deuxième système de régulation 40 est activé pour chauffer l'hydrogène présent dans le deuxième réservoir 22. Le mode de fonctionnement peut être prolongé jusqu'à ce que la pression dans le deuxième réservoir 22 ne soit plus suffisante pour alimenter le (ou les) système(s) à hydrogène 16.

Quel que soit le mode de réalisation, un dispositif d'alimentation 18 configuré pour alimenter en hydrogène au moins un système à hydrogène 16 fonctionnant à une pression de fonctionnement comprend :
a. au moins un premier réservoir 20 configuré pour stocker de l'hydrogène à l'état liquide et à une pression inférieure à la pression de fonctionnement, ledit premier réservoir 20 comportant au moins un orifice de sortie 20.1,
b. au moins une ligne principale 24 qui s'étend d'une extrémité amont 24.1 reliée à l'orifice de sortie 20.1 du premier réservoir 20 jusqu'à au moins une extrémité aval 24.2 configurée pour être reliée au système à hydrogène 16,
c. au moins une pompe 34 située sur la ligne principale 24 et configurée pour comprimer l'hydrogène sortant du premier réservoir 20 à une pression supérieure ou égale à la pression de fonctionnement,
d. au moins un système de régulation thermique principal 36 situé en amont de l'extrémité aval 24.2 de la ligne principale 24,
e. au moins un deuxième réservoir 22 configuré pour stocker de l'hydrogène, à l'état liquide et à une pression supérieure à la pression de fonctionnement, alimentant en hydrogène la ligne principale entre la pompe 34 et le système de régulation thermique principal 36.

Cette solution combine les avantages des premier et deuxième modes de réalisation de l'art antérieur. Le premier réservoir 20 permet d'obtenir une alimentation comme les dispositifs de l'art antérieur stockant l'hydrogène à l'état liquide, ce qui contribue à limiter le volume et la masse du réservoir à quantité d'énergie équivalente. Le deuxième réservoir 22 permet d'obtenir une alimentation comme le dispositif du deuxième mode de réalisation de l'art antérieur stockant l'hydrogène à l'état liquide et avec une pression supérieure à la pression de fonctionnement, ce qui contribue à simplifier le dispositif d'alimentation.

L'invention permet de réduire le nombre d'éléments, certains d'entre eux assurant une fonction de redondance mais également une fonction de modulation de la quantité d'hydrogène fournie, ce qui contribue à simplifier le dispositif d'alimentation tout en conservant un haut niveau de sécurité. Ainsi, le deuxième réservoir 22 permet de doubler le premier réservoir 20 en cas de dysfonctionnement de ce dernier et/ou de la pompe 34 mais également de participer à la régulation de la quantité d'hydrogène transmise au(x) système(s) à hydrogène 16 lors de phases spécifiques du vol comme les phases de décollage et de roulage.

Selon un mode de réalisation privilégié, le dispositif d'alimentation 18 comprend une ligne retour 26 permettant de réintroduire une partie de l'hydrogène sortant du premier réservoir 20 dans ce dernier, ce qui contribue à simplifier la régulation de la quantité d'hydrogène transmise à chaque système à hydrogène 16, plus particulièrement de la quantité d'hydrogène sortant du premier réservoir 20 et traversant la pompe 34 qui peut alors être sensiblement constante.

## Revendications

1. Dispositif d'alimentation (18) configuré pour alimenter en hydrogène au moins un système à hydrogène (16) fonctionnant à une pression de fonctionnement, ledit dispositif d'alimentation (18) comprenant :
- au moins un premier réservoir (20) configuré pour stocker de l'hydrogène à un état liquide et à une pression inférieure à la pression de fonctionnement, ledit premier réservoir (20) comportant au moins un orifice de sortie (20.1),
- au moins une ligne principale (24) qui s'étend d'une extrémité amont (24.1) reliée à l'orifice de sortie (20.1) du premier réservoir (20) jusqu'à au moins une extrémité aval (24.2) configurée pour être reliée à un système à hydrogène (16),
- au moins une pompe (34) située sur la ligne principale (24) et configurée pour comprimer l'hydrogène sortant du premier réservoir (20) à une pression supérieure ou égale à la pression de fonctionnement,
- au moins un système de régulation thermique principal (36) situé en amont de l'extrémité aval (24.2) de la ligne principale (24),
- au moins un deuxième réservoir (22) configuré pour stocker de l'hydrogène à un état liquide et à une pression supérieure à la pression de fonctionnement, ledit deuxième réservoir (22) alimentant en hydrogène la ligne principale (24) entre la pompe (34) et le système de régulation thermique principal (36),
- **caractérise en ce que** le dispositif d'alimentation comprend également au moins un système de régulation (40) de pression situé dans le deuxième réservoir (22).

2. Dispositif d'alimentation (18) selon la revendication 1, **caractérisé en ce que** la ligne principale (24) comprend un point de bifurcation (28) distant des extrémités amont et aval (24.1, 24.2), un tronçon amont (28.1) qui s'étend entre l'extrémité amont (24.1) de la ligne principale (24) et le point de bifurcation (28) ainsi qu'au moins un tronçon aval (28.2) qui s'étend entre le point de bifurcation (28) et l'extrémité aval (24.2) de la ligne principale (24), **en ce que** le premier réservoir (20) comprend au moins un orifice d'entrée (20.2) via lequel est introduit de l'hydrogène dans le premier réservoir (20) et **en ce que** le dispositif d'alimentation (18) comprend au moins une ligne retour (26) reliant le point de bifurcation (28) et l'orifice d'entrée (20.2) du premier réservoir (20) ainsi qu'un système de contrôle des flux d'hydrogène dans les tronçons amont et aval (28.1, 28.2) ainsi que dans la ligne retour (26).

3. Dispositif d'alimentation (18) selon la revendication précédente, **caractérisé en ce que** le système de contrôle des flux d'hydrogène comprend au moins une première vanne (32.1) au niveau du tronçon amont (28.1), au moins une deuxième vanne (32.2) au niveau de la ligne retour (26) ainsi qu'au moins une troisième vanne (32.3) au niveau du tronçon aval (28.2) ; chacune des première, deuxième et troisième vannes (32.1, 32.2, 32.3) étant configurée pour ajuster le débit de l'hydrogène qui la traverse.

4. Dispositif d'alimentation (18) selon l'une des revendications 2 à 3, **caractérisé en ce que** le dispositif d'alimentation (18) comprend au moins un système de régulation (38) thermique situé au niveau de la ligne retour (26).

5. Dispositif d'alimentation (18) selon l'une des revendications 2 à 4, **caractérisé en ce que** le deuxième réservoir (22) est situé au niveau de la ligne retour (26) et comprend au moins un orifice de sortie (22.1) relié à l'orifice d'entrée (20.2) du premier réservoir (20) ainsi qu'au moins un orifice combiné (22.2) relié au point de bifurcation (28).

6. Dispositif d'alimentation (18) selon les revendications 4 et 5, **caractérisé en ce que** le deuxième réservoir (22) est situé entre le point de bifurcation (28) et le système de régulation (38) thermique.

7. Dispositif d'alimentation (18) selon l'une des revendications 2 à 4, **caractérisé en ce que** le deuxième réservoir (22) est situé au niveau du tronçon aval (28.2) et comprend au moins un orifice de sortie (22.1') relié à l'extrémité aval (24.2) de la ligne principale (24) ainsi qu'au moins un orifice d'entrée (22.2') relié au point de bifurcation (28).

8. Dispositif d'alimentation (18) selon la revendication précédente qui dépend au moins de la revendication 3, **caractérisé en ce que** la troisième vanne (32.3) est intercalée entre le deuxième réservoir (22) et le point de bifurcation (28) et **en ce que** le dispositif d'alimentation (18) comprend une quatrième vanne (32.4) située entre le deuxième réservoir (22) et le système de régulation thermique principal (36).

9. Dispositif d'alimentation (18) selon l'une des revendications précédentes, **caractérisé en ce que** la ligne principale (24) comprend plusieurs extrémités aval (24.2) ainsi que plusieurs branches distinctes (30.1, 30.2), une pour chaque extrémité aval (24.2), chaque branche (30.1, 30.2) comportant un système de régulation thermique principal (36).

10. Aéronef comprenant au moins un dispositif d'alimentation (18) selon l'une des revendications précédentes ainsi qu'au moins un système à hydrogène (18) alimenté en hydrogène par le dispositif d'alimentation (18).

## Patentansprüche

1. Versorgungseinrichtung (18), die dazu konfiguriert ist, mindestens ein Wasserstoffsystem (16), das mit einem Betriebsdruck arbeitet, mit Wasserstoff zu versorgen, wobei die Versorgungseinrichtung (18) Folgendes beinhaltet:
- mindestens einen ersten Tank (20), der dazu konfiguriert ist, Wasserstoff in einem flüssigen Zustand und mit einem Druck, der kleiner als der Betriebsdruck ist, zu speichern, wobei der erste Tank (20) mindestens eine Austrittsöffnung (20.1) umfasst,
- mindestens eine Hauptleitung (24), die sich von einem stromaufwärtigen Ende (24.1), das mit der Austrittsöffnung (20.1) des ersten Tanks (20) verbunden ist, bis zu mindestens einem stromabwärtigen Ende (24.2), das dazu konfiguriert ist, mit einem Wasserstoffsystem (16) verbunden zu sein, erstreckt,
- mindestens eine Pumpe (34), die sich in der Hauptleitung (24) befindet und dazu konfiguriert ist, den aus dem ersten Tank (20) austretenden Wasserstoff auf einen Druck zu komprimieren, der größer als oder gleich dem Betriebsdruck ist,
- mindestens ein Haupttemperaturregelungssystem (36), das sich stromauf des stromabwärtigen Endes (24.2) der Hauptleitung (24) befindet,
- mindestens einen zweiten Tank (22), der dazu konfiguriert ist, Wasserstoff in einem flüssigen Zustand und mit einem Druck, der größer als der Betriebsdruck ist, zu speichern, wobei der zweite Tank (22) die Hauptleitung (24) zwischen der Pumpe (34) und dem Haupttemperaturregelungssystem (36) mit Wasserstoff versorgt;
- **dadurch gekennzeichnet, dass** die Versorgungseinrichtung ferner mindestens ein Druckregelungssystem (40) beinhaltet, das sich in dem zweiten Tank (22) befindet.

2. Versorgungseinrichtung (18) nach Anspruch 1, **dadurch gekennzeichnet, dass** die Hauptleitung (24) einen Verzweigungspunkt (28), der von dem stromaufwärtigen und dem stromabwärtigen Ende (24.1, 24.2) entfernt ist, einen stromaufwärtigen Abschnitt (28.1), der sich zwischen dem stromaufwärtigen Ende (24.1) der Hauptleitung (24) und dem Verzweigungspunkt (28) erstreckt, sowie mindestens einen stromabwärtigen Abschnitt (28.2), der sich zwischen dem Verzweigungspunkt (28) und dem stromabwärtigen Ende (24.2) der Hauptleitung (24) erstreckt, beinhaltet, dass der erste Tank (20) mindestens eine Eintrittsöffnung (20.2) beinhaltet, über die Wasserstoff in den ersten Tank (20) eingeleitet wird, und dass die Versorgungseinrichtung (18) mindestens eine Rücklaufleitung (26), die den Verzweigungspunkt (28) und die Eintrittsöffnung (20.2) des ersten Tanks (20) verbindet, sowie ein System zur Steuerung der Wasserstoffströme in dem stromaufwärtigen und dem stromabwärtigen Abschnitt (28.1, 28.2) sowie in der Rücklaufleitung (26) beinhaltet.

3. Versorgungseinrichtung (18) nach dem vorhergehenden Anspruch, **dadurch gekennzeichnet, dass** das System zur Steuerung der Wasserstoffströme mindestens ein erstes Ventil (32.1) im Bereich des stromaufwärtigen Abschnitts (28.1), mindestens ein zweites Ventil (32.2) im Bereich der Rücklaufleitung (26) sowie mindestens ein drittes Ventil (32.3) im Bereich des stromabwärtigen Abschnitts (28.2) beinhaltet; wobei jedes von dem ersten, dem zweiten und dem dritten Ventil (32.1, 32.2, 32.3) dazu konfiguriert ist, den Durchfluss des Wasserstoffs, der durch es hindurchgeht, einzustellen.

4. Versorgungseinrichtung (18) nach einem der Ansprüche 2 bis 3, **dadurch gekennzeichnet, dass** die Versorgungseinrichtung (18) mindestens ein Temperaturregelungssystem (38) beinhaltet, das sich im Bereich der Rücklaufleitung (26) befindet.

5. Versorgungseinrichtung (18) nach einem der Ansprüche 2 bis 4, **dadurch gekennzeichnet, dass** sich der zweite Tank (22) im Bereich der Rücklaufleitung (26) befindet und mindestens eine Austrittsöffnung (22.1), die mit der Eintrittsöffnung (20.2) des ersten Tanks (20) verbunden ist, sowie mindestens eine kombinierte Öffnung (22.2), die mit dem Verzweigungspunkt (28) verbunden ist, beinhaltet.

6. Versorgungseinrichtung (18) nach den Ansprüchen 4 und 5, **dadurch gekennzeichnet, dass** sich der zweite Tank (22) zwischen dem Verzweigungspunkt (28) und dem Temperaturregelungssystem (38) befindet.

7. Versorgungseinrichtung (18) nach einem der Ansprüche 2 bis 4, **dadurch gekennzeichnet, dass** sich der zweite Tank (22) im Bereich des stromabwärtigen Abschnitts (28.2) befindet und mindestens eine Austrittsöffnung (22.1'), die mit dem stromabwärtigen Ende (24.2) der Hauptleitung (24) verbunden ist, sowie mindestens eine Eintrittsöffnung (22.2'), die mit dem Verzweigungspunkt (28) verbunden ist, beinhaltet.

8. Versorgungseinrichtung (18) nach dem vorhergehenden Anspruch, der mindestens von Anspruch 3 abhängt, **dadurch gekennzeichnet, dass** das dritte Ventil (32.3) zwischen den zweiten Tank (22) und den Verzweigungspunkt (28) geschaltet ist und dass die Versorgungseinrichtung (18) ein viertes Ventil (32.4) beinhaltet, das sich zwischen dem zweiten Tank (22) und dem Haupttemperaturregelungssystem (36) befindet.

9. Versorgungseinrichtung (18) nach einem der vorhergehenden Ansprüche, **dadurch gekennzeichnet, dass** die Hauptleitung (24) mehrere stromabwärtige Enden (24.2) sowie mehrere verschiedene Zweige (30.1, 30.2), einen für jedes stromabwärtige Ende (24.2), beinhaltet, wobei jeder Zweig (30.1, 30.2) ein Haupttemperaturregelungssystem (36) umfasst.

10. Flugzeug, das mindestens eine Versorgungseinrichtung (18) nach einem der vorhergehenden Ansprüche sowie mindestens ein Wasserstoffsystem (18), das durch die Versorgungseinrichtung (18) mit Wasserstoff versorgt wird, beinhaltet.

## Claims

1. Supply device (18) configured to supply hydrogen to at least one hydrogen system (16) operating at an operating pressure, said supply device (18) comprising:
- at least one first tank (20) configured to store hydrogen in a liquid state and at a pressure lower than the operating pressure, said first tank (20) having at least one outlet orifice (20.1),
- at least one main line (24) that extends from an upstream end (24.1) connected to the outlet orifice (20.1) of the first tank (20) as far as at least one downstream end (24.2) configured to be connected to a hydrogen system (16),
- at least one pump (34) situated on the main line (24) and configured to compress the hydrogen leaving the first tank (20) to a pressure higher than or equal to the operating pressure,
- at least one main thermal regulation system (36) situated upstream of the downstream end (24.2) of the main line (24),
- at least one second tank (22) configured to store hydrogen in a liquid state and at a pressure higher than the operating pressure, said second tank (22) supplying hydrogen to the main line (24) between the pump (34) and the main thermal regulation system (36);
- **characterized in that** the supply device also comprises at least one pressure regulating system (40) located in the second tank (22).

2. Supply device (18) according to Claim 1, **characterized in that** the main line (24) comprises a bifurcation point (28) remote from the upstream and downstream ends (24.1, 24.2), an upstream section (28.1) that extends between the upstream end (24.1) of the main line (24) and the bifurcation point (28) and at least one downstream section (28.2) that extends between the bifurcation point (28) and the downstream end (24.2) of the main line (24), **in that** the first tank (20) comprises at least one inlet orifice (20.2) via which hydrogen is introduced into the first tank (20) and **in that** the supply device (18) comprises at least one return line (26) connecting the bifurcation point (28) and the inlet orifice (20.2) of the first tank (20) and a system for controlling the hydrogen streams in the upstream and downstream sections (28.1, 28.2) and in the return line (26).

3. Supply device (18) according to the preceding claim, **characterized in that** the system for controlling the hydrogen streams comprises at least one first valve (32.1) at the upstream section (28.1), at least one second valve (32.2) at the return line (26) and at least one third valve (32.3) at the downstream section (28.2); each of the first, second and third valves (32.1, 32.2, 32.3) being configured to adjust the flow rate of the hydrogen that passes through it.

4. Supply device (18) according to either of Claims 2 and 3, **characterized in that** the supply device (18) comprises at least one thermal regulation system (38) situated at the return line (26).

5. Supply device (18) according to one of Claims 2 to 4, **characterized in that** the second tank (22) is situated at the return line (26) and comprises at least one outlet orifice (22.1) connected to the inlet orifice (20.2) of the first tank (20) and at least one combined orifice (22.2) connected to the bifurcation point (28).

6. Supply device (18) according to Claims 4 and 5, **characterized in that** the second tank (22) is situated between the bifurcation point (28) and the thermal regulation system (38).

7. Supply device (18) according to one of Claims 2 to 4, **characterized in that** the second tank (22) is situated at the downstream section (28.2) and comprises at least one outlet orifice (22.1') connected to the downstream end (24.2) of the main line (24) and at least one inlet orifice (22.2') connected to the bifurcation point (28).

8. Supply device (18) according to the preceding claim which is dependent at least on Claim 3, **characterized in that** the third valve (32.3) is interposed between the second tank (22) and the bifurcation point (28) and **in that** the supply device (18) comprises a fourth valve (32.4) situated between the second tank (22) and the main thermal regulation system (36).

9. Supply device (18) according to one of the preceding claims, **characterized in that** the main line (24) comprises a plurality of downstream ends (24.2) and a plurality of distinct branches (30.1, 30.2), one for each downstream end (24.2), each branch (30.1, 30.2) having a main thermal regulation system (36).

10. Aircraft comprising at least one supply device (18) according to one of the preceding claims and at least one hydrogen system (18) supplied with hydrogen by the supply device (18).
